# EUROPEAN PATENT SPECIFICATION

(11) **EP 2 573 429 B1**
(45) Date of publication and mention of the grant of the patent: **23.04.2014**
(21) Application number: 11182334.0
(22) Date of filing: 22.09.2011
(51) Int. Cl.: F16H 57/04

(54) **A method for controlling lubrication of a gear unit and a gear unit**
Verfahren zur Steuerung der Schmierung einer Getriebeeinheit und Getriebeeinheit
Procédé de contrôle d'une pompe de lubrification d'une unité d'engrenage et unité d'engrenage

(43) Date of publication of application: 27.03.2013
(73) Proprietor: Moventas Gears Oy, 40101 Jyväskylä (FI)
(72) Inventor: Huikko, Jarno, 41800 Korpilahti (FI); Koponen, Mikko, 42100 Jämsä (FI); Maalismaa, Sami, 40340 Jyväskylä (FI); Uusitalo, Kari, 40520 Jyväskylä (FI)
(74) Representative: Berggren Oy Ab

(56) References cited:
- DE-A1-102009 019 814
- JP-A- 11 337 449
- JP-A- 2009 085 423

## Description

### Field of the invention

The present invention relates to a method for controlling circulation of lubrication fluid in a gear with one or more controllable valves located in a lubrications oil channelling.

### Background

In this description we use the term gearwheel to refer to a cogged, rotating machine part. Two or more meshing gearwheels constitute a gear stage. The term gear as such refers in this description to a mechanical system having a first shaft and a second shaft, between which one or more gear stages provide speed and torque conversions and/or a change in a direction of a rotation axis. A gear unit comprises a gear proper and may comprise auxiliary augmenting systems, such as instrumentation, control, and lubrication arrangements.

Adequate lubrication of different parts of a gear is very important for a proper functioning and lifetime of the gear. In addition of the lubrication effect, the lubricant medium, which is fluid and often oil, is also used to lower the temperature of the gear during operation.

However, since the complexity of gear units and different applications for gear units are ever increasing, the known lubrication solutions for gear systems are not always enough to achieve the required level of lubrication and/or cooling for all the parts of a gear system.

One of the main problems in the known lubrication solutions used in gear lubrication is that there is no way to react to high local temperatures within the gear unit except to increase the total flow of lubrication fluid. However, the total flow of the lubrication fluid has always an upper limit which can easily be reached if the high local temperature is tried to be decreased by increasing the total flow.

The high local temperatures also create changes in viscosity of the lubrication fluid, which changes in viscosity create deviations in flow distribution.

Publication DE 199 12 328 A1 discloses a device for controlling oil in motor vehicle where the directing of lubrication oil to different pairs of gears can at least partially be based on measured temperature of the lubrication oil. This publication shows a method for controlling lubrication of a gear unit and also a gear unit according to the preambles of claims 1 and 4.

### Summary

In the present invention the proportions of lubrication fluid directed to different parts of a gear unit are controlled based on temperature measurement values from the lubrication fluid at different parts of the gear unit. In this way the different parts or the gear system can be cooled with different quantities of lubrication fluid.

In a method in accordance with the present invention temperature of a lubrication fluid circulating in a lubrication channelling of a gear unit is measured in at least two locations of the gear unit, and larger proportion of the lubrication fluid is directed to the warmer of the at least two locations and correspondingly smaller proportion of the lubrication fluid is directed to the colder of the at least two locations.

The directing of the proportions of the lubrication fluid can be advantageously controlled at least partially by at least one valve and/or by rotational speed of a lubrication fluid pump.

A gear unit in accordance with the present invention comprises:
- a first shaft and a second shaft for connecting to an external mechanical systems,
- at least one gear stage between the first and second shafts,
- a channeling for directing lubrication fluid to flow through the at least one gear stage and bearings of the gear unit,
- two or more temperature sensors for measuring temperature of the lubrication fluid from at least two locations of the gear unit and supplying at least two temperature signals representative thereof,
- the channeling comprises at least one controllable valve for changing distribution of the flow of the lubrication fluid between branches of the channeling,
- and the gear unit comprises a controller for controlling the at least one controllable valve on the basis of the at least two temperature signals so as to increase the proportion of the lubrication fluid flowing to warmer of the at least two locations of the gear unit and correspondingly to decrease the proportion of the lubrication fluid flowing to colder of the at least two locations of the gear unit.

The lubrication fluid used in the present invention is advantageously lubrication oil.

With the solution in accordance with the present invention improvement of lubrication as well as better heat removal through increased lubrication liquid flow can be achieved locally within the gear unit.

In the characterizing part of claim 1 is disclosed more precisely the features that are characterizing to the method in accordance with present invention, and in the characterizing part of claim 4 is disclosed more precisely the features that are characterizing to the gear unit in accordance with present invention. Other advantageous features are disclosed in dependent claims.

### Brief description of the figures

The exemplifying embodiments of the invention and their advantages are explained in greater detail below in the sense of example and with reference to the accompanying drawings, in which:
figure 1 shows a schematic section view of a gear unit in accordance with the present invention, and
figure 2 shows a schematic section view of a gear unit in accordance with an alternative embodiment of the present invention.

### Description of the embodiments

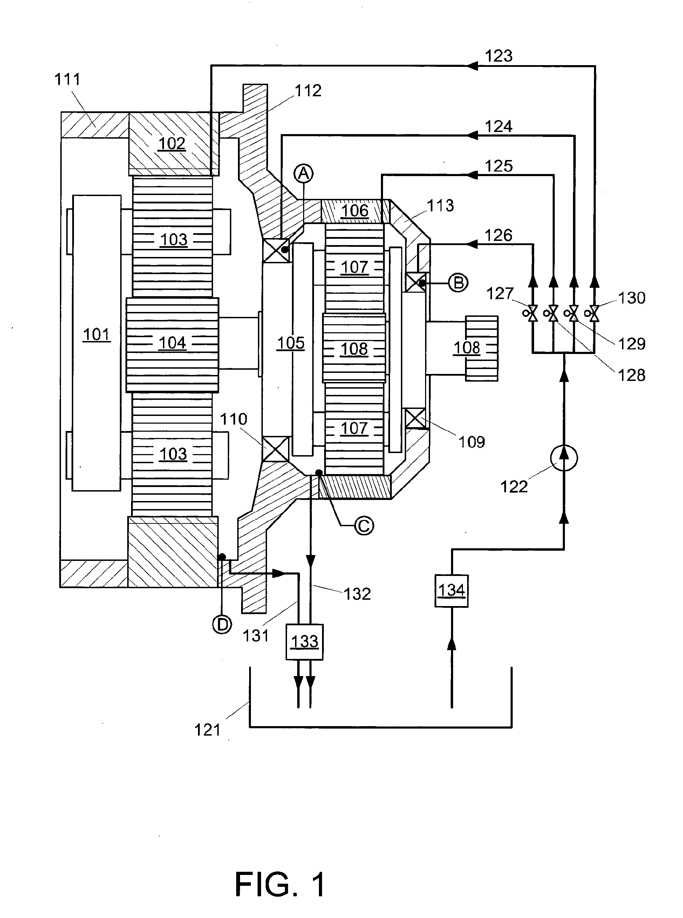

Figure 1 shows a schematic section view of a gear unit according to an advantageous, exemplifying embodiment of the invention.

The gear unit disclosed in figure 1 is a planetary gear unit comprising two planet-gear stages. The first planet-gear stage comprises a planet-wheel carrier 101, a gear ring 102, planet wheels 103, and a sun gear shaft 104. The second planet-gear stage comprises a planet-wheel carrier 105, a gear ring 106, planet wheels 107, and a sun gear shaft 108. The planet-wheel carrier 101 of the first planet-gear stage constitutes a part of a mechanical interface structure arranged to receive the mechanical power from a suitable prime mover. Therefore, the planet-wheel carrier 101 of the first planet-gear stage is rotated by the prime mover. The gear ring 102 is stationary. The sun gear shaft 104 of the first planet-gear stage is connected to the planet-wheel carrier 105 of the second planet-gear stage. Therefore, the planet-wheel carrier 105 of the second planet-gear stage is rotated by the sun gear shaft 104 of the first planet-gear stage. The gear ring 106 is stationary. The sun gear shaft 108 of the second planet-gear stage may be connected to a rotor of a generator, for example. In the gear unit shown in figure 1, the sun gear shaft 108 of the second planet-gear stage is floating on support of the planet-wheels 107 of the second planet-gear stage. The sun gear shaft 104 of the first planet-gear stage is floating on support of the planet-wheels 104 of the first planet-gear stage and on support of the planet-wheel carrier 105 of the second planet-gear stage. It is, however, also possible that one or both of the sun gear shafts is/are bearing-mounted.

In the embodiment of figure 1, the stationary gear ring 102 forms part of the frame of the first gear stage, and the stationary gear ring 106 form part of the frame of the second gear stage. It should be noted, that within the context of the present invention the stationary gear rings 102 and 106 can be enclosed within the frames of the gear stages, or these gear rings can be rotatable gear rings whereby they must be enclosed by the frames. Therefore, the frame of the gear unit, which in the embodiment of figure 1 comprises frame parts 111, 112 and 113 in addition to the gear rings 102 and 106, may be manufactured as a single entity, in a single casting, for example. This kind of single frame piece for the gear unit enhances the structural strength of the frame, and allows for better conveying of the forces from within the gear unit to the frame of the unit and from there to suitable external mechanical fastening structures.

The gear unit of figure 1 also has a lubrication system for lubricating bearings 109, 110, and the gears of the gear stages. In the embodiment of figure 1, the lubrication system comprises a lubrication fluid tank which in this case is a lubrication oil tank 121, a lubrication pump 122, lubrication channeling 123-126 for feeding the lubrication oil into the gear unit, controllable valves 127-130 for controlling the amount of lubrication oil fed to the gear unit, lubrication oil channeling 131, 132 for draining lubrication oil from the gear unit, a lubrication oil cooling element 123, and a lubrication oil filter element 134. The lubrication system of the gear unit may also comprise other parts and elements such as lubrication oil pre-heating elements.

The gear unit also comprises temperature sensors A-D. The temperature sensor A measures the temperature of the bearing 109, the temperature sensor B measures the temperature of the bearing 110, the temperature sensor C measures the temperature of the lubrication oil used to lubricate the second gear stage, and the temperature sensor D measures the temperature of the lubrication oil used to lubricate the first gear stage. The temperature sensors used may be thermo couples, Pt100s, Pt 1000s or temperature transducers, for example.

The controllable valves 127-130 are controlled on basis of the temperature measurement data from the temperature sensors A-D so, that the volume of lubrication oil passing through the controllable valves 127-130 is increased or decreased. In this way a greater portion of the lubrication oil can be fed to the gear stage and/or bearing with higher temperature(s), and smaller portion of the lubrication oil can be fed to the gear stage and/or bearing with lower temperature. The controlling of the controllable valves 127-130 may be advantageously carried out by an automatic controlling system.

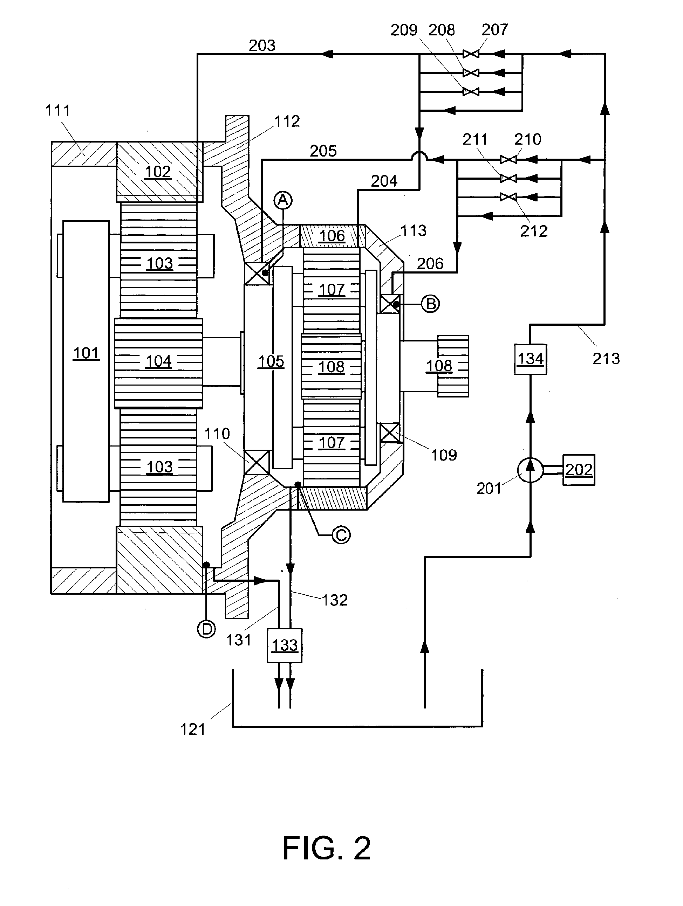

The gear unit of figure 2 is also a planetary gear unit where the controlling of the lubrication system is formed in accordance of another embodiment of the present invention.

In the solution of figure 2 the controlling of the proportion of lubrication oil directed to different parts of the gear unit is realized with two separate valve groups of on/off -type valves, which valves only have two possible positions: open and closed. Oil pump 201 feeds lubrication oil to the first valve group 207-209 and the second valve group 210-212 via lubrication channel 213. The first valve group, consisting of valves 207-209, controls the proportions of lubrication oil directed to the first and second gear stage of the gear unit via lubrication channels 203 and 204. The second valve group, consisting of valves 210-212, controls the proportions of lubrication oil directed to the bearings 109 and 110 of the gear unit via lubrication channels 206 and 205.

In the embodiment of figure 2, closing any of the valves 207-212 affects the whole lubrication system. For example, closing of valve 207 increases pressure difference in channel 213, 203, which causes increase of lubrication fluid flow in lubrication channels 205 and 206.

The on/off -type valves 207-209 and 210-212 are closed and opened on basis of the temperature measurement data from the temperature sensors A-D. The temperature data from temperature sensors A and B is used to direct greater portion of lubrication oil to the bearing with higher temperature by opening and closing the valves 207-209 of the first valve group. Similarly, the temperature data from temperature sensors C and D is used to direct greater portion of lubrication oil to the gear stage with higher temperature by opening and closing the valves 210-212 of the second valve group. The controlling of the on/off valves 207-209 and 210-212 on basis of the measured temperature data may be advantageously carried out by an automatic controlling system.

In the lubrication system of figure 2 the lubrication oil pump 201 comprises an electric motor, and the oil pump is equipped with frequency controller 202, which enables controlling of the rotational speed of the oil pump. This way the oil pressure within the lubrication system can be varied.

In an embodiment of the present invention, the controlling of the proportions of lubrication oil directed to different parts of the gear unit can also be achieved by use of controllable rotation speed oil pump together with choker arrangements within the lubrication channeling. These features may also be incorporated in the embodiments shown in figures 1 and 2.

Even though in the figures the invention is described as applied to a planet gear unit, it is to be noted, that the invention can be used in any type of gear unit using circulating lubrication. These types of gear units comprise, but are not restricted to, different type of planetary gear units and different type of bevel gear units, for example.

## Claims

1. A method for controlling lubrication of a gear unit, in which method temperature of a lubrication fluid circulating in a lubrication channelling (123 - 126) of a gear unit is measured, **characterized in that** the temperature of lubrication fluid is measured in at least two locations of the gear unit, and larger proportion of the lubrication fluid is directed to the warmer of the at least two locations and correspondingly smaller proportion of the lubrication fluid is directed to the colder of the at least two locations.

2. A method according to claim 1, wherein the proportion of the lubrication fluid directed to different locations is controlled at least partially by at least one valve (127 - 130).

3. A method according to claim 1 or 2, wherein that the proportion of the lubrication fluid directed to different locations is controlled at least partially by rotational speed of a lubrication fluid pump (122).

4. A gear unit comprising:
- a first shaft (104) and a second shaft (108) for connecting to an external mechanical system,
- at least one gear stage (105 - 107) between the first and second shafts,
- a channeling (123 - 126) for directing lubrication fluid to flow through the at least one gear stage and bearings (109 - 110) of the gear unit,
**characterized in that** it further comprises
- two or more temperature sensors (A - D) for measuring temperature of the lubrication fluid from at least two locations of the gear unit and supplying at least two temperature signals representative thereof,
and **in that** the channeling (123 - 126) comprises at least one controllable valve (127 - 130) for changing distribution of the flow of the lubrication fluid between branches of the channeling, and the gear unit comprises a controller for controlling the at least one controllable valve (127 - 130) on the basis of the at least two temperature signals so as to increase the proportion of the lubrication fluid flowing to warmer of the at least two locations of the gear and correspondingly to decrease the proportion of the lubrication fluid flowing to colder of the at least two locations of the gear unit.

5. A gear unit according to claim 4, wherein the at least one controllable valve (127 - 130) is a digital valve having two possible positions: open and closed.

6. A gear unit according to claim 4, wherein the at least one controllable valve (127 - 130) comprises two or more parallel connected digital valves each of which having two possible positions: open and closed.

7. A gear unit according to any of claims 4-6, wherein each of the at least one controllable valve (127 - 130) is an electrically controllable valve.

8. A gear unit according to claim 4, wherein the gear unit comprises a lubrication fluid pump (122) for making the lubrication fluid to flow in the channeling and the controller is arranged to control rotational speed of the lubrication fluid pump at least partly on the basis of position of the at least one controllable valve (127 - 130).

## Patentansprüche

1. Verfahren zum Steuern einer Schmierung einer Getriebeeinheit, bei welchem Verfahren eine Temperatur eines in einem Schmierkanal (123-126) einer Getriebeeinheit zirkulierenden Schmierfluids gemessen wird, **dadurch gekennzeichnet, dass** die Temperatur des Schmierfluids an zumindest zwei Orten der Getriebeeinheit gemessen wird, und ein größerer Anteil des Schmierfluids zum wärmeren der zumindest zwei Orte geleitet wird und entsprechend ein kleinerer Anteil des Schmierfluids zum kälteren der zumindest zwei Orte geleitet wird.

2. Verfahren gemäß Anspruch 1, bei dem der Anteil des zu verschiedenen Orten geleiteten Schmierfluids zumindest teilweise durch zumindest ein Ventil (127-130) gesteuert wird.

3. Verfahren gemäß Anspruch 1 oder 2, bei dem der Anteil des zu verschiedenen Orten geleiteten Schmierfluids zumindest teilweise durch eine Drehgeschwindigkeit einer Schmierfluidpumpe (122) gesteuert wird.

4. Getriebeeinheit, mit:
einer ersten Welle (104) und einer zweiten Welle (108) zum Verbinden mit einem externen mechanischen System,
zumindest eine Getriebestufe (105 - 107) zwischen der ersten und zweiten Welle,
ein Kanal (123 - 126) zum Leiten eines Schmierfluids, damit dieses durch die zumindest eine Getriebestufe und Lagerungen (109 - 110) der Getriebeeinheit strömt,
**dadurch gekennzeichnet, dass** sie ferner aufweist
zwei oder mehr Temperatursensoren (A - D) zum Messen einer Temperatur des Schmierfluids von zumindest zwei Orten der Getriebeeinheit und zum Zuführen von zumindest zwei hiervon repräsentativen Temperatursignalen,
und dadurch, dass der Kanal (123 - 126) zumindest ein steuerbares Ventil (127 - 130) zum Verändern einer Verteilung der Strömung des Schmierfluids zwischen Ästen des Kanals aufweist, und die Getriebeeinheit eine Steuerung zum Steuern des zumindest einen steuerbaren Ventils (127 - 130) auf der Basis der zumindest zwei Temperatursignale aufweist, um den Anteil des zum wärmeren der zumindest zwei Orte des Getriebes strömenden Schmierfluids zu erhöhen und entsprechend den Anteil des zum kälteren der zumindest zwei Orte der Getriebeeinheit strömenden Schmierfluids zu verringern.

5. Getriebeeinheit gemäß Anspruch 4, bei der das zumindest eine steuerbare Ventil (127 - 130) ein digitales Ventil mit zwei möglichen Positionen ist: offen und geschlossen.

6. Getriebeeinheit gemäß Anspruch 4, bei der das zumindest eine steuerbare Ventil (127 - 130) zwei oder mehr parallel, verbundene digitale Ventile aufweist, von denen jedes zwei mögliche Positionen aufweist: offen und geschlossen.

7. Getriebeeinheit gemäß einem der Ansprüche 4 - 6, bei der jedes des zumindest einen steuerbaren Ventils (127 - 130) ein elektrisch steuerbares Ventil ist.

8. Getriebeeinheit gemäß Anspruch 4, bei der die Getriebeeinheit eine Schmierfluidpumpe (122) aufweist, um das Schmierfluid im Kanal strömen zu lassen, und die Steuerung eine Drehgeschwindigkeit der Schmierfluidpumpe zumindest teilweise auf der Basis einer Position des zumindest einen steuerbaren Ventils (127 - 130) steuern kann.

## Revendications

1. Procédé de commande de la lubrification d'une unité d'engrenage, procédé dans lequel la température d'un fluide de lubrification circulant dans un conduit de lubrification (123-126) d'une unité d'engrenage est mesurée, **caractérisé en ce que** la température du fluide de lubrification est mesurée à au moins deux emplacements de l'unité d'engrenage, et une proportion plus grande du fluide de lubrification est dirigée vers l'emplacement plus chaud des au moins deux emplacements, et la proportion correspondante plus petite du fluide de lubrification est dirigée vers l'emplacement plus froid des au moins deux emplacements.

2. Procédé selon la revendication 1, dans lequel la proportion du fluide de lubrification dirigée vers des emplacements différents est commandée au moins partiellement par au moins une vanne (127-130).

3. Procédé selon la revendication 1 ou 2, dans lequel la proportion de fluide de lubrification dirigé vers différents emplacements est commandée au moins partiellement par la vitesse de rotation d'une pompe de fluide de lubrification (122).

4. Unité d'engrenage comprenant :
un premier arbre (104) et un deuxième arbre (103) pour la connexion à un système mécanique externe,
au moins un étage d'engrenage (105-107) entre les premier et deuxième arbres ;
un conduit (123-126) pour amener le fluide de lubrification à se diriger à travers au moins un étage d'engrenage précité et des paliers (109-110) de l'unité d'engrenage ;
**caractérisée en ce qu'**elle comprend en outre deux ou plusieurs capteurs de température (A-D) pour mesurer la température du fluide de lubrification d'au moins deux emplacements de l'unité d'engrenage et pour fournir au moins deux signaux de température représentatifs de celle-ci,
et **en ce que** le conduit (123-126) comprend au moins une vanne (127-130) apte à être contrôlée pour changer la distribution de l'écoulement du fluide de lubrification entre des branches du conduit, et l'unité d'engrenage comprend un dispositif de commande pour commander au moins une vanne apte à être contrôlée (127-130) sur la base des au moins deux signaux de température de manière à augmenter la proportion du fluide de lubrification s'écoulant à l'emplacement plus chaud des au moins deux emplacements de l'engrenage et, d'une manière correspondante, pour diminuer la proportion du fluide de lubrification s'écoulant vers l'emplacement plus froid des au moins deux emplacements de l'unité d'engrenage.

5. Unité d'engrenage selon la revendication 4, dans laquelle au moins une vanne apte à être contrôlée (127-130) est une vanne numérique ayant deux positions possibles: ouverte et fermée.

6. Unité d'engrenage selon la revendication 4, dans laquelle au moins une vanne apte à être contrôlée (127-130) comprend deux ou plusieurs vannes numériques connectées en parallèle, chacune ayant deux positions : ouverte et fermée.

7. Unité d'engrenage selon l'une quelconque des revendications 4 à 6, dans laquelle chacune des au moins une vanne apte à être contrôlée (127-130) est une vanne à commande électrique.

8. Unité d'engrenage selon la revendication 4, dans laquelle l'unité d'engrenage comprend une pompe de fluide de lubrification (122) pour amener le fluide de lubrification à s'écouler dans le conduit, et le dispositif de commande est agencé pour commander la vitesse de rotation de la pompe du fluide de lubrification au moins partiellement sur la base de la position d'au moins une vanne apte à être contrôlée précitée (127-130).
